# EUROPÄISCHE PATENTSCHRIFT

(11) **EP 1 992 710 B1**
(45) Veröffentlichungstag und Bekanntmachung des Hinweises auf die Patenterteilung: **18.11.2009**
(21) Anmeldenummer: 08007455.2
(22) Anmeldetag: 16.04.2008
(51) Int. Cl.: C22C 37/06, B60G 7/00

(54) **Verwendung einer Stahllegierung**
Use of a steel alloy
Utilisation d'un alliage d'acier

(30) Priorität: 20.04.2007 DE 102007018838
(43) Veröffentlichungstag der Anmeldung: 19.11.2008
(73) Patentinhaber: Benteler Automobiltechnik GmbH, 33102 Paderborn (DE)
(72) Erfinder: Frehn, Andreas Dr., 33129 Delbrück (DE); Zuber, Armin Dr., 33175 Bad Lippspringe (DE)

(56) Entgegenhaltungen:
- EP-A- 1 712 379

## Beschreibung

Die Erfindung betrifft die Verwendung einer Stahllegierung.

Fahrzeugbauteile aus Gusswerkstoffen sind in der Fahrzeugindustrie bekannt.

So beschreibt die WO 03/031252 A1 ein Trägerelement, das aus Eisen, insbesondere aus Stahl, gegossen wird, wobei das Trägerelement eine Wandstärke von weniger als 3 mm aufweist. Allerdings handelt es sich hierbei nicht um ein Fahrwerksbauteil, sondern um ein Strukturbauteil wie beispielsweise eine A- Säule eines Kraftfahrzeugs. An Strukturbauteile und Fahrwerksbauteile werden wegen ihres unterschiedlichen Einsatzbereiches unterschiedliche Anforderungen gestellt. Während Strukturbauteile dazu dienen, im Crashfall Stoßenergie abzufangen, müssen Fahrwerksbauteile dynamischen Belastungen, die durch die Bewegung des Fahrzeugs entstehen, standhalten. Wegen dieser unterschiedlichen Anforderungen sind diese beiden Bauteilarten also nur begrenzt miteinander vergleichbar. Zudem wird das Trägerelement beispielsweise als Fachwerkstruktur ausgebildet und zur Verstärkung mit metallischen Hohlkugeln oder mit Metallschaum gefüllt, welche dann umgossen werden. Der Herstellungsprozess ist daher relativ aufwändig. Weiterhin wird die Legierung des Stahlgusses hinsichtlich ihrer chemischen Zusammensetzung nicht konkretisiert.

Aus der DE 10015 325 A1 ist eine Tragrahmenstruktur bekannt, die als dünnwandiges Stahlgussbauteil mit einer Wandstärke bis hinab zu 1,0 mm ausgestaltet ist. Allerdings handelt es sich hier wiederum um ein Strukturbauteil. Außerdem ist auch hier die konkrete chemische Zusammensetzung des Stahlgusses nicht genannt.

Die DE 103 57 939 A1 beschreibt ebenfalls ein Strukturteil aus Stahlguss, nämlich ein Bauteil für eine Tragrahmenstruktur, das als dünnwandiges Stahlgussteil ausgestaltet ist. In das Bauteil ist ein Stahlblech derart integriert, dass ein innenliegender Teil des Stahlblechs im Stahlgussteil eingebettet ist, Somit ist das Bauteil nicht einstückig ausgestaltet, was den Herstellungsprozess erschwert.

Die DE 100 29 189 A1 beschreibt einen Querlenker einer Radaufhängung, der als einstückiges Gussteil ausgestaltet ist und aus Stahlguss besteht. Die konkrete chemische Zusammensetzung des Stahlgusses ist allerdings nicht bekannt.

Die EP 0 655 511 beschreibt einen warmfesten, ferritischen Stahlguss für Auspuffanlagenteile für Kraftfahrzeuge, der die folgende, in Gewichtsprozent angegebene Zusammensetzung aufweist: C = 0,20 -1,20 %, C-Nn/8 = 0,05 - 0,45 %, Si ≤ 2 %, Mn ≤ 2 %, Cr = 16,0 -25,0 %, W und/oder Mo = 1,0 - 5,0 %, Nb = 1,02 - 6,0 %, Ni = 0,1 - 2,0 %, N = 0,01 - 0,15 %, Rest Eisen und erschmelzungsbedingte Verunreinigungen. Durch den hohen Kohlenstoffgehalt von bis zu 1,2 % ist der Werkstoff jedoch kaum schweißbar. Da Fahrwerksbauteile beim Verbau häufig an andere Bauteile angebunden werden müssen, ist die Schweißbarkeit eine wichtige Voraussetzung. Gusssorten mit hohem Kohlenstoffgehalt eignen sich daher nicht.

Die DD 103 016 A schlägt einen hochfesten Stahlguss vor, der aus 0,20 bis 0,55 % Kohlenstoff; 0,30 bis 0,85 % Silizium; 1,10 bis 1,90 % Mangan; 0,40 bis 1,50 % Chrom; 0,20 bis 0,60 % Molybdän und 0,005 bis 0,01 % Bor besteht. Außerdem kann der Stahlguss einzeln oder in Kombination 0,2 bis 0,4 % Vanadium; 0,1 bis 0,3 % Titan; 0,1 bis 0,8 % Aluminium und 0,3 bis 0,6 % Kupfer enthalten. Die Cussstücke aus den angeführten Stählen besitzen gute Voraussetzungen und können erfolgreich für hochbeanspruchte Teile des Schwermaschinenbaus eingesetzt werden.

Die JP 07305139 A schlägt eine Stahlsorte für Schmiedeteile vor. Die Stahlsorte besteht in Gewichtsprozent aus 0,05 bis 0,35 % Kohlenstoff; 0,02 bis 1,5 % Silizium; 0,3 bis 1,5 % Mangan; 0,0005 bis 0,010 % Bor; weniger als 1,5 % Chrom; weniger als 0,2 % Molybdän und weniger als 0,3 % Nickel. Zusätzlich enthält die Legierung noch 0,001 bis 0,6 % eines oder mehrerer der Elemente S, Pb, Ca, Bi und Te und insgesamt 0,005 bis 0,2 % von Al und/ oder Nb.

Die JP 2000273582 AA offenbart eine Cussstahlsorte aus 0,05 bis 0,18 % Kohlenstoff; 0,10 bis 0,5 % Silizium; 0,3 bis 1,0 % Mangan; maximal =,5 % Nickel; 0,8 bis 3,0 % Chrom; 0,4 bis 1,5 % Molybdän; 0,001 bis 0,006 % Bor; 0,008 bis 0,06 % Titan; 0,010 bis 0,030 % Aluminium; maximal 0,010 % Stickstoff; maximal 0,02 % Phosphor und maximal 0,01 % Schwefel als Verunreinigungen; Rest Eisen und erschmelzungsbedingte Verunreinigungen. Zusätzlich müssen Titan und Nickel folgende Gleichung erfüllen: (3,4 x N) / Ti kleiner oder gleich 1,6. Es handelt sich um eine spezielle Stahllegierung für Druckbehälterteile.

Die US 3, 251, 682 beschreibt eine Stahlsorte bestehend aus weniger als 0,25 % Kohlenstoff, weniger als 0,5 % Silizium; 0,50 bis 1,50 % Mangan; 0,80 bis 2,0 % Chrom; 0,2 bis 0,6 % Molybdän; 0,01 bis 0,15 % Aluminium; 0,005 bis 0,0003 % Bor; 0,017 bis 0,05 % Titan; Rest im Wesentlichen Eisen. Diese Stahlsorte wird gehärtet und vergütet oder normalisiert.

Die erfindungsgemäße Legierungszusammensetzung ist beispielsweise aus der DE 197 43 802 C2 bekannt. Die Legierung ist bekannt für Bleche, die insbesondere warm tiefgezogen und zumindest teilweise gehärtet werden. Bevorzugt passiert dies bei dünnwandigen Stahlbauteilen unter Verbleib in dem Warmformwerkzeug. Die Stahllegierung weist nach dem Härten eine hohe Festigkeit auf, aufgrund des geringen Kohlenstoffanteils ist die Legierung gut schweißbar.

Die DE 200 09 689 U1 beschreibt eine Verbundlenkerhinterachse für Kraftfahrzeuge aus einer Stahlsorte 22MnB5, welche zwei durch einen Querträger verbundene Längslenker umfasst. Die Längslenker sind als Rohrbauteile gestaltet und der Querträger als Rohrprofil. Alternativ kann die Achse auch in Schalenbauweise hergestellt sein. Der Querträger ist mindestens partiell gehärtet. Allerdings erfordert die Herstellung von Fahrwerksbauteilen die Darstellung komplexer Geometrien. Nach dem aufgezeigten Stand der Technik der beiden vorangegangenen Druckschriften ist dafür eine Vielzahl von Arbeitsschritten in Form von Pressen, Stanzen, Biegen, Ziehen, Längsnahtschweißen etc. erforderlich. Diese umfangreichen Arbeitsschritte erschweren den Herstellungsprozess.

Die EP 1 712 379 A1 offenbart die in dieser Erfindung genannte Stahlzusammensetzung als warm gewalztes Stahlblech, welches anschließend über mehrere Fertigungsschritte wie einem Formen von ersten und zweiten Armblechen, einem Formen von ersten und zweiten Öffnungen in den entgegen gesetzten Enden der Armbleche, einem Ablängen von ersten und zweiten Abstandshaltern von einem Rohr, einem Positionieren der Abstandshalter zwischen den Armblechen und einem Verschweißen der Abstandshalter mit den Armen zum Endprodukt Lenker verarbeitet wird. Es ist daher eine Vielzahl von Arbeitsschritten in Form von Pressen, Stanzen, Biegen, Ziehen, Längsnahtschweißen etc. erforderlich. Diese umfangreichen Arbeitsschritte erschweren den Herstellungsprozess.

Ausgehend von diesem Stand der Technik ist es daher Aufgabe der Erfindung, die Verwendung einer Stahllegierung anzugeben, die den Einsatzbedingungen eines Fahrwerksbauteils, insbesondere den dynamischen Belastungen, denen es ausgesetzt ist und den Verbaubedingungen gerecht wird und die ein vereinfachtes Herstellungsverfahren für Fahrwerksbauteile ermöglicht.

Diese Aufgabe löst die Erfindung mit den Merkmalen des Patentanspruchs 1.

Vorgeschlagen wird die Verwendung einer Stahllegierung, die die folgende, in Gewichtsprozent angegebene Zusammensetzung aufweist: Kohlenstoff (C) = 0,18-0,3 %, Silizium (Si) = 0,1 - 0,7 %, Mangan (Mn) = 1,0 - 2,5 %, Phosphor (P) ≤ 0,025 %, Schwefel (S) ≤ 0.01 %, Chrom (Cr) 0,1 - 0,8 %, Molybdän (Mo) 0,1 -0,5 %, Titan (Ti) = 0,02 - 0,05 %, Bor (B) = 0,002 - 0,005 %, Aluminium (AI) = 0,01 - 0,06 %, Rest Eisen (Fe) und erschmelzungsbedingte Verunreinigungen als Gusswerkstoff für Fahrwerksbauteile. Insbesondere können so einstückige Fahrwerksbauteile hergestellt werden, die bevorzugt eine Wanddicke kleiner 5 mm aufweisen. Gerade Querlenker lassen sich so einfach und mit guten Eigenschaften produzieren.

Vorteil der erfindungsgemäß verwendeten Legierung gegenüber Grauguss ist die gute Schweißbarkeit. Aufgrund des geringen Kohlenstoffanteils der erfindungsgemäßen Stahllegierung in Höhe von 0,18 bis 0,3 % lassen sich die Bauteile beim Verbau gut an andere Bauteile mittels Schweißen anbinden. Grauguss weist einen wesentlich höheren Kohlenstoffgehalt auf und ist nicht schweißbar. Gegenüber Aluminiumguss oder Eisenguss weist der erfindungsgemäße Stahlguss eine gute Zähigkeit auf. Diese ist für die Herstellung eines Fahrwerksbauteils von großer Wichtigkeit, da derartige Bauteile neben schwingender Beanspruchung auch Schlag- und Stoßbelastungen standhalten müssen. Gegenüber der Herstellung von Fahnrverksbauteilen, insbesondere von Querlenkem, im Blechschalen- oder Rohrdesign hat die erfindungsgemäße Verwendung der Stahllegierung als Stahlguss den Vorteil, dass auch komplexe Bauteilgeometrien hergestellt werden können,

Die erfindungsgemäße Stahllegierung ist gut härtbar und erreicht im gehärteten Zustand hohe Festigkeitswerte. Für den Giessvorgang wird die Giesslegierung aufgeschmolzen, um dann in der Giessform zu einem Gussgefüge zu erstarren.

Dieses Gussgefüge ist regelmäßig so spröde, dass es anschließend normalisiert werden muss. Dazu wird das Gussteil auf eine Temperatur oberhalb des AC₃ Punktes der Legierung erwärmt, was eine entsprechende Gefügeänderung in den Austenitbereich zur Folge hat. Um hohe Festigkeitswerte zu erreichen, muss die erfindungsgemäße Stahllegierung mit einer kritischen Härtegeschwindigkeit abgekühlt werden, die im Prinzip nur durch ein Abschrecken in Flüssigkeit, in der Regel in Wasser, erreichbar ist. In vorteilhafter Weise kann daher der ohnehin erforderliche Normalisierungsvorgang dazu genutzt werden, um das Gussteil nach dem Normalisierungsglühen abzuschrecken und so zu härten oder zu vergüten. Ein separater Härtevorgang zur Erhöhung der Festigkeitswerte ist nicht notwendig. Durch die Verwendung der erfindungsgemäßen Stahlgusslegierung kann das Bauteil daher ohne Hohlräume oder eingegossene Aluminium-Bereiche vollständig aus Stahlguss hergestellt werden. Insofern können Bauteile einstückig hergestellt und die Wandstärke durch die erhöhte Festigkeit auf ein Minimum reduziert werden. Vorteile dieser Wandstärkenreduktion sind eine Reduktion des Gewichts des Bauteils und ein geringerer Bedarf an Werkstoff.

Falls benötigt, ist der erfindungsgemäße Stahlguss aber auch in einem separaten Arbeitsgang partiell oder vollständig härtbar. Hierbei können diverse bereits bekannte partielle oder vollständige Erwärmungs- und/ oder Härtemethoden angewandt werden. Zudem ist die Legierung auch nach dem Gießen noch formbar. Durch die erfindungsgemäße Verwendung der aufgezeigten Stahllegierung als Gusswerkstoff sind im Herstellungsprozess keine aufwändigen Biege- und/ oder Tiefziehprozesse notwendig. So kann die Anzahl der Arbeitsschritte gegenüber der Blechbauweise gesenkt werden. Die erfindungsgemäß verwendete Stahllegierung ist gut schweißbar. Zwar werden beim Einbringen von Schweißwärme voreingestellte Festigkeiten in der Schweißnaht herabgesetzt, je nach Anwendungsfall ist dies jedoch unkritisch, da die Festigkeitswerte den Anforderungen noch genügen.

Die Verwendung der erfindungsgemäßen Stahlgusslegierung ist zwar weiterhin im Vergleich zu Eisenguss oder Aluminiumguss relativ kostspielig. Der erhöhte Kostenaufwand wird jedoch durch die Gewichtsreduktion und die geringere Menge an benötigtem Werkstoff relativiert.

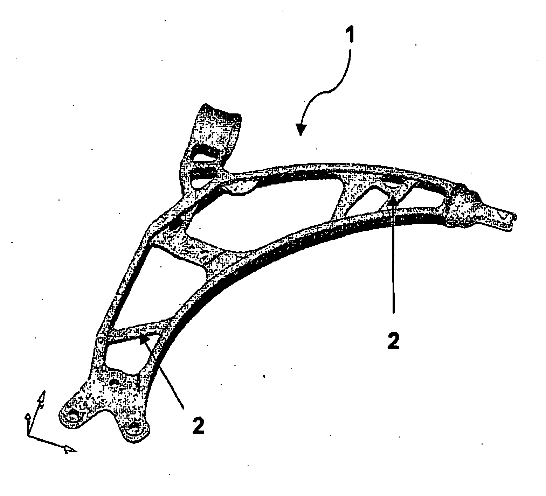

Die einzige Figur zeigt einen gegossenen Querlenker 1, Der Querlenker 1 ist dünnwandig gegossen und nur durch wenige Querstreben 2 verstärkt. Dadurch ist er besonders leicht bauend.

## Patentansprüche

1. Verwendung einer Stahllegierung, die die folgende, in Gewichtsprozent angegebene Zusammensetzung aufweist:
| | |
|---|---|
| Kohlenstoff (C) | 0,18-0,3% |
| Silizium (Si) | 0,1-0,7% |
| Mangan (Mn) | 1,0-2,5% |
| Phosphor (P) | max. 0,025 % |
| Schwefel (S) | max. 0,01 % |
| Chrom (Cr) | 0,1-0,8% |
| Molybdän (Mo) | 0,1-0,5% |
| Titan (Ti) | 0,02 - 0,05 % |
| Bor (B) | 0,002-0,005 % |
| Aluminium (Al) | 0,01 - 0,06 % |
| Rest Eisen (Fe) und erschmelzungsbedingte Verunreinigungen, | |
als Gusswerkstoff für Fahrwerksbäuteile.

2. Verwendung einer Stahllegierung nach Anspruch 1 zur Herstellung von einstückigen Fahrwerksbauteilen.

3. Verwendung einer Stahllegierung nach Anspruch 1 oder 2 zur Herstellung von Fahrwerksbauteilen, die eine Wanddicke kleiner 5 mm aufweisen.

4. Verwendung einer Stahllegierung nach einem der vorhergehenden Ansprüche zur Herstellung eines gegossenen Querlenkers 1 für ein Fahrwerk eines Kraftfahrzeugs.

## Claims

1. Use of a steel alloy with the following composition in percent by weight:
| | |
|---|---|
| Carbon (C) | 0.18-0.3% |
| Silicon (Si) | 0.1-0.7% |
| Manganese (Mn) | 1.0-2.5% |
| Phosphor (P) | max. 0.025 % |
| Sulphur (S) | max. 0.01 % |
| Chrome (Cr) | 0.1-0.8% |
| Molybdenum (Mo) | 0.1 -0.5% |
| Titan (Ti) | 0.02-0.05% |
| Boron (B) | 0.002 - 0.005 % |
| Aluminium (Al) | 0.01-0.06% |
| the remaining part consisting of iron (Fe) and impurities resulting from smelting, | |
as a cast material for chassis components.

2. Use of a steel alloy according to claim 1 for manufacture of one-piece chassis components.

3. Use of a steel alloy according to claims 1 or 2 for manufacture of chassis components with a wall thickness of less than 5 mm.

4. Use of a steel alloy according to one of the preceding claims for manufacture of a cast wishbone 1 for an automobile chassis.

## Revendications

1. Utilisation d'un alliage d'acier ayant la composition suivante (pourcentages en poids) :
| | |
|---|---|
| carbone (C) | 0,18-0,3% |
| silicium (SI) | 0,1-0,7% |
| manganèse (Mn) | 1,0-2,5% |
| phosphore (P) | max. 0,025 % |
| soufre (S) | max. 0,01 % |
| chrome (Cr) | 0,1 - 0,8% |
| molybdène (Mo) | 0,1 - 0,5% |
| titane (Ti) | 0,02 - 0,05% |
| bore (B) | 0,002 - 0,005% |
| aluminium (Al) | 0,01 - 0,06% |
| reste constitué de fer (Fe) et d'impuretés dues à la fusion, | |
comme matériau de moulage de pièces de châssis.

2. Utilisation d'un alliage d'acier selon la revendication 1 pour la fabrication de pièces de châssis monobloc.

3. Utilisation d'un alliage d'acier selon la revendication 1 ou 2 pour la fabrication de pièces de châssis ayant une épaisseur de paroi inférieure à 5 mm.

4. Utilisation d'un alliage d'acier selon l'une des revendications précédentes pour la fabrication d'un bras moulé 1 pour le châssis d'un véhicule à moteur.
